# EUROPÄISCHE PATENTANMELDUNG

(11) **EP 3 260 321 A1**
(43) Veröffentlichungstag der Anmeldung: **27.12.2017**
(21) Anmeldenummer: 17176915.1
(22) Anmeldetag: 20.06.2017
(51) Int. Cl.: B60J 1/20

(54) **SONNENBLENDE FÜR KFZ-SEITENFENSTER**

(30) Priorität: 21.06.2016 AT 3062016
(71) Anmelder: Krassnig, Sepp, 1190 Wien (AT)
(72) Erfinder: Krassnig, Sepp, 1190 Wien (AT)
(74) Vertreter: Ellmeyer, Wolfgang

(57) **Zusammenfassung**

Eine Sonnenblende (1) aus einer Platte aus Karton, Pappe oder Kunststoff für ein Fahrzeug-Seitenfenster zum Einschieben zwischen die Fensterscheibe (2) und die Fensterdichtung (3), wobei die Sonnenblende an die Form der Fensterscheibe (2) angepasst ist, wobei die Differenz auf Höhe der Unterkante (1 c) der Sonnenblende (1) nicht mehr als etwa die Dicke der Fensterdichtung (3) in der Scheibenebene ausmacht, mit dem Kennzeichen, dass die Sonnenblende (1): a) einstückig ausgeführt ist; b) von der Oberkante (2b) der Fensterscheibe (2) abwärts zumindest zwei Drittel der Höhe derselben abdeckt; und c) freien Blick zum äußeren Rückspiegel durch eine Aussparung ermöglicht, die darin besteht, dass i) die Unterkante (1 c) der Sonnenblende (1) in einem vorderen Bereich (1 c') gekrümmt oder geknickt ist und dadurch aufwärts verläuft; und/oder ii) die Unterkante (1 c) der Sonnenblende (1) in einem vorderen Bereich eine Ausnehmung (4) aufweist.

## Beschreibung

### STAND DER TECHNIK

Als Schutz von Kfz-Insassen, insbesondere des Fahrers, gegen Blendung durch Sonnenstrahlen, vor allem bei tief stehender Sonne, ist eine Reihe von unterschiedlichen Sonnenblenden bekannt. Dazu zählen auf die Fensterscheibe aufzuklebende Blenden, darunter flächig auf die Scheibe aufgeklebte Ausführungsformen, wie z.B. getönte transparente Selbstklebefolien, sowie mit Saugnäpfen an der Scheibe befestigte Blenden oder Rollos. Von Letzteren sind auch oberhalb des Fensters im Fahrzeuginnenraum montierbare Versionen bekannt. In ähnlicher Weise sind natürlich auch Jalousien und Vorhänge bekannt.

Alle diese bekannten Ausführungsformen weisen jedoch diverse Nachteile auf. Fest auf das Fenster aufgeklebte Folien sind nur unter mitunter erheblichem Aufwand wieder von der Scheibe zu lösen - und das darüber hinaus nur in den seltensten Fällen zerstörungsfrei -, wenn kein Bedarf an einem solchen Sonnenschutz besteht, z.B. in den Wintermonaten. Mittels Saugnäpfen auf die Scheibe aufgeklebte Blenden oder Rollos können sich mit der Zeit wieder ablösen und Letztere bei Erschütterungen während der Fahrt wieder aufrollen, was mitunter eine Gefahrenquelle darstellen kann. Oberhalb des Fensters angebrachte Lösungen, wie etwa Rollos, Jalousien oder Vorhänge, sind umständlich in der Montage, hinterlassen nach ihrer Entfernung unschön anzusehende Löcher in der Fahrzeuginnenverkleidung und sind zudem meist relativ hochpreisig.

In US 2012/292941 A1 werden Sonnenblenden offenbart, die zwischen die Fensterscheibe und die Fensterdichtung in einer Seitentür eines Kfz eingeschoben werden können. Diese sind vor allem als mehrteilige Blenden ausgeführt, wobei die einzelnen Teile der entsprechenden Sonnenblende jeweils einen bestimmten Teil der Fensterfläche abdecken und in ihrer Form an jene des Fensters in diesem Bereich angepasst sind. Auch eine die gesamte Fensterfläche abdeckende Ausführungsform ist offenbart, die gleichzeitig die einzige Ausführungsform darstellt, die die gesamte Länge des Fensters abdeckt. Die Blenden sind vorzugsweise undurchsichtig und können aus verschiedenen Kunststoffen gefertigt werden. Papier und Pappe sind aufgrund möglichen Faulens bei Kontakt mit Feuchtigkeit jedoch ausgeschlossen. Die einzelnen Teile können zwischen 0,01 und 0,15 Zoll, d.h. zwischen 0,25 und 3,8 mm, dick sein.

JP 2005/041358 A offenbart Ausführungsformen analog zu montierender Sonnenblenden, die speziell an gekrümmte Seitenscheiben angepasst sind, wobei ausschließlich Sonnenblenden beschrieben werden, die aus mehreren einzelnen Teilen zusammengesetzt sind, die jeweils einen bestimmten Teil der Fensterfläche abdecken und deren Ränder gemäß den Konturen der Fenterscheibe im jeweligen Bereich geformt sind. Vorzugsweise werden zu diesem Zweck undurchsichtige, durchsichtige oder getönte Kunststofffolien bzw. -platten eingesetzt, allerdings wird auch bedrucktes Papier erwähnt.

Der Nachteil solcher Ausführungsformen von Sonnenblenden für die vorderen Seitenfenster von Automobilen liegt darin, dass für den Fahrer der Blick in den Rückspiegel von der Sonnenblende blockiert wird, sobald die Blende einen bestimmten Anteil der Höhe des Seitenfensters abdeckt, und zwar sowohl bei Verwendung für das Fenster der Fahrertür als auch für die Beifahrertür.

Aufgabe der vorliegenden Erfindung war vor diesem Hintergrund die Entwicklung einer neuen Art von Sonnenblende für Kfz-Fenster, die vor allem, aber nicht nur für den Fahrer zuverlässigen Blendschutz bietet, kostengünstig in der Herstellung ist, sich durch einfache Montage und Wiederabnehmbarkeit auszeichnet und dem Fahrer ermöglicht, ungehindert in die äußeren Rückspiegel zu blicken.

### OFFENBARUNG DER ERFINDUNG

Dieses Ziel erreicht die vorliegende Erfindung durch Bereitstellung einer Sonnenblende für ein Fahrzeug-Seitenfenster zum Einschieben zwischen die Fensterscheibe, die eine zur B-Säule des Fahrzeugs parallele Seitenkante und eine abwärts gekrümmte Oberkante aufweist, und die Fensterdichtung, wobei die Sonnenblende aus einer Platte aus Karton, Pappe oder Kunststoff besteht, die eine Dicke von nicht mehr als 5 mm und eine Form aufweist, die an die durch die Seitenkante und die abwärts gekrümmte Oberkante gegebene Form der Fensterscheibe angepasst ist, deren horizontale Dimension jedoch geringer als jene der Fensterscheibe ist, wobei die Differenz auf Höhe der Unterkante der Sonnenblende nicht mehr als etwa die Dicke der Fensterdichtung in der Scheibenebene ausmacht, mit dem Kennzeichen, dass die Sonnenblende
a) einstückig ausgeführt ist;
b) von der Oberkante der Fensterscheibe abwärts zumindest zwei Drittel der Höhe derselben abdeckt; und
c) freien Blick zum äußeren Rückspiegel durch eine Aussparung ermöglicht, die darin besteht, dass
   i) die Unterkante der Sonnenblende in einem vorderen Bereich gekrümmt oder geknickt ist und dadurch aufwärts verläuft; und/oder
   ii) die Unterkante der Sonnenblende in einem vorderen Bereich eine Ausnehmung aufweist.

Durch eine solche Krümmung bzw. einen solchen Knick oder eine solche Ausnehmung, die hierin der Einfachkeit halber kollektiv als "Aussparung" bezeichnet werden, wird der Blick des Fahrers in die äußeren Rückspiegel, d.h. sowohl den fahrerseitigen als auch den beifahrerseitigen Rückspiegel, durch die erfindungsgemäße Sonnenblende nicht behindert, selbst wenn die Blende ansonsten den Großteil, nämlich zumindest zwei Drittel, vorzugsweise zumindest drei Viertel und noch bevorzugter zumindest vier Fünftel, der Höhe oder sogar die Gesamtheit der Fensterscheibe abdeckt, um für optimalen Blendschutz zu sorgen. Zur Vereinfachung der Anbringung der erfindungsgemäßen Sonnenblende zwischen Fensterscheibe und -dichtung deckt sie allerdings in bevorzugten Ausführungsformen nicht mehr als 90 % der Höhe der Scheibe ab.

Eine solche Sonnenblende ist, ähnlich wie die aus dem Stand der Technik bekannten Ausführungsformen, kostengünstig herstellbar und andererseits einfach am Fenster zu befestigen, da sie bloß zwischen die Fensterscheibe und die Fensterdichtung eingeschoben zu werden braucht, und kann zudem auch leicht wieder entfernt werden, weswegen sie flexibel einsetzbar ist. Durch die an die Form der Fensterscheibe angepasste Form der erfindungsgemäßen Sonnenblende mit der durch die geringere Länge gegebenen leichten Untermaßigkeit ist ein Großteil des Umfangs der Sonnenblende fest zwischen der Scheibe und der Fensterdichtung eingeklemmt, so dass die Sonnenblende auch bei Erschütterungen, wie sie etwa beim Fahren auf Kopfsteinpflaster auftreten, sich nicht von der Scheibe löst. Die steht im Gegensatz zu den eingangs zitierten Ausführungsformen des Standes der Technik, die - bis auf eine einzige Ausnahme, die die gesamte Scheibenfläche einnimmt - nicht in einem Stück die volle Länge der Fensterscheibe abdecken. Demgegenüber ist die erfindungsgemäße Blende einstückig ausgeführt, was die Verwendung deutlich vereinfacht.

Diese nur geringe Untermaßigkeit der erfindungsgemäßen Sonnenblende ist - zusätzlich zu der aus dem Stand der Technik bekannten, an die Scheibe angepassten Form und der Dicke der Sonnenblende, die 5 mm nicht übersteigen darf, um die Blende ausreichend weit in den Spalt zwischen Fensterscheibe und Fensterdichtung einschieben zu können - für die Wirkung der Erfindung wesentlich, zumal es sich bei den Sonnenblenden der vorliegenden Erfindung durchwegs um einteilige Blenden handelt, die den Großteil der Scheibenfläche bedecken. Aufgrund der nur geringen Längendifferenz zwischen der Fensterscheibe, womit in diesem Fall die gesamte Scheibe und nicht nur deren sichtbarer Teil bei geschlossenem Fenster gemeint ist, und der (in Bezug auf die Länge) leicht untermaßigen Blende steckt Letztere nach dem Einschieben zwischen Scheibe und Dichtung fest im Dichtungsspalt. Die Längendifferenz beträgt gemäß vorliegender Erfindung nicht mehr als etwa die Dicke der Fensterdichtung (in der Ebene der Scheibe gesehen), so dass sowohl die Seitenkante als auch die gekrümmte Oberkante (deren gekrümmter Teil gleichzeitig die Vorderkante bildet, wie dies aus den beiliegenden Zeichnungen hervorgeht) der Sonnenblende zumindest über die halbe Dicke der Dichtung an Letzterer anliegen, was die Blende in Position hält.

Die optimale Längendifferenz hängt dabei sowohl von der Dicke als auch vom Material der Sonnenblende ab: Je dünner die Sonnenblende und je flexibler das Material, desto geringer kann die Längendifferenz sein, ohne dass es zu Problemen beim Einschieben der Blende in den Dichtungsspalt kommt. In bevorzugten Ausführungsformen der erfindungsgemäßen Sonnenblende mit einer Dicke von nicht mehr als 3 mm wird die Längendifferenz zur Gesamtlänge der Fensterscheibe - unter Annahme einer Dicke der Fensterdichtung von etwa 3 cm - nicht mehr als etwa 1 cm, noch bevorzugter nicht mehr als etwa 5 mm, betragen. Letzteres wird beispielsweise bei Verwendung einer flexiblen, dünnen Kunststoffplatte mit einer Dicke von nur 1 bis 2 mm als Sonnenblende zu bevorzugen sein.

Um die Sonnenblende relativ weit in den Bereich zwischen Fensterscheibe und Fensterdichtung, hierin auch als "Dichtungsspalt" bezeichnet, einschieben zu können, nimmt die Dicke der Sonnenblende in bevorzugten Ausführungsformen an der Seitenkante und/oder an der gekrümmten Oberkante zum Rand hin ab, d.h. sie verjüngt sich zum Rand hin und ist dort z.B. abgeschrägt, was eine sehr geringe Längendifferenz zwischen Sonnenblende und Fensterscheibe ermöglicht, z.B. eine Differenz von nur 2 oder 3 mm. Derartige Ausführungsformen sind speziell bei Verwendung eines flexiblen Kunststoffmaterials für die erfindungsgemäßen Sonnenblende vorteilhaft, das ausreichend biegsam und flexibel ist und sich gut in den Dichtungsspalt einschieben lässt, so dass nur die Unterkante der Sonnenblende nicht im Dichtungsspalt steckt.

Wie bereits erwähnt besteht die erfindungsgemäße Sonnenblende aus Papiermaterial wie Karton oder Pappe (deren Grenzen fließend sind und von der Dicke und dem Flächengewicht abhängen), oder aber aus Kunststoff oder einem kunststoffbeschichteten Papiermaterial, wobei Kunststoff umfassende Ausführungsformen aufgrund der höheren Haltbarkeit und Flexibilität bevorzugt werden. In besonders bevorzugten Ausführungsformen besteht die Sonnenblende aus einem getönten transparenten Kunststoff, um die Sicht des Fahrers durch den Blendschutz nicht übermäßig einzuschränken, insbesondere aus einem leichtgewichtigen Kunststoff, wie z.B. Polypropylen, da geringes Gewicht verhindert, dass sich die Sonnenblende bei Erschütterungen von der Scheibe löst und aus dem Dichtungsspalt herausrutscht. Aufgrund der erfindungsgemäßen Aussparung liegen freilich auch undurchsichtige Ausführungsformen der erfindungsgemäßen Sonnenblende im Schutzumfang der Erfindung.

In diesem Zusammenhang sei auch erneut explizit darauf hingewiesen, dass die erfindungsgemäße Sonnenblende nicht auf die Verwendung für das fahrerseitige Türfenster beschränkt ist, sondern auch für das Fenster an der Beifahrerseite einsetzbar ist, solange die Fensterform den obigen Voraussetzungen entspricht, d.h. solange das Fenster eine zur B-Säule des Fahrzeugs parallele Seitenkante sowie eine gekrümmte Oberkante, wie hierin definiert, aufweist.

Unter der "zur B-Säule des Fahrzeugs parallelen Seitenkante" ist hierin die hintere Kante des Fensters der Fahrer- oder Beifahrertür gemeint. Diese verläuft stets parallel zur mittleren Fahrzeugsäule, die als B-Säule bezeichnet wird, da die Fensterscheibe in der an der B-Säule montierten Fensterdichtung steckt. Bei der Mehrzahl der Fahrzeuge erstreckt sich diese B-Säule, die als Verbindung zwischen Fahrzeugboden und Fahrzeugdach in der Mitte der Fahrgastzelle definiert ist, im Wesentlichen senkrecht. Bei einigen Fahrzeugtypen weicht sie allerdings mitunter auch mehr oder weniger stark von der Vertikalen ab. Im Falle einer solchen Neigung der B-Säule verläuft die Seitenkante des Fensters und somit auch der erfindungsgemäßen Sonnenblende ebenfalls mit einer bestimmten Neigung, d.h. in einem spitzen Winkel zur Vertikalen, üblicherweise aufwärts-rückwärts geneigt. Die erfindungsgemäßen Sonnenblenden sind auch für derartige Fälle geeignet, wobei mitunter die Höhe der Blende entsprechend anzupassen ist, wie dies später näher beschrieben wird.

Weiters sei festgehalten, dass gemäß vorliegender Erfindung unter der "gekrümmten Oberkante" des Fensters und somit auch der erfindungsgemäßen Sonnenblende nicht ausschließlich stetig verlaufende Krümmungen zu verstehen sind, sondern auch Ausführungsformen, bei denen die Form der Scheibe einen oder auch mehre (üblicherweise abgerundete) Knicke aufweist. Wesentlich ist bei der vorliegenden Erfindung bloß, dass nur eine Kante der erfindungsgemäßen Sonnenblende nicht zwischen Fensterscheibe und Fensterdichtung eingeschoben wird, nämlich die Unterkante der Blende. Auf diese Weise wird die erfindungsgemäße Sonnenblende nämlich nach dem Einschieben in den "Dichtungsspalt" in drei Richtungen der Fensterebene von der Fensterdichtung gehalten und ist so gegen Herausrutschen gesichert.

Bei einer nahezu rechteckigen Fensterform müsste die Sonnenblende nämlich gegenüber den Fensterscheibendimensionen stärker untermaßig sein, d.h. eine Länge aufweisen, die kaum (z.B. nur um 1 oder 2 mm) größer ist als die Länge des sichtbaren Teils der Fensterscheibe auf entsprechender Höhe, da sie ansonsten nicht in den Dichtungsspalt eingeschoben werden könnte. Bei einer so geringen Längendifferenz wäre die Sonnenblende jedoch kaum im Dichtungsspalt gesichert und würde dazu neigen, schon bei geringen Erschütterungen aus dem Spalt herauszufallen. Aus diesem Grund ist die vorliegende Erfindung auf Fensterformen mit einer "gekrümmten Oberkante", wie oben definiert, eingeschränkt.

Um das Einschieben in den "Dichtungsspalt" weiter zu vereinfachen, macht die Höhe der Sonnenblende vorzugsweise nicht mehr als 90 % der Höhe aus, wie bereits oben erwähnt. Mit der "Höhe des Fensters" ist hierin durchwegs der sichtbare Teil der Scheibe bei geschlossenem Fenster gemeint.

Verläuft die B-Säule des Fahrzeugs, wie oben erwähnt, nicht im Wesentlichen vertikal, sondern geneigt oder schräg, d.h. in einem spitzen Winkel zur Vertikalen, so dass auch die Seitenkante des Fensters und somit auch jene der erfindungsgemäßen Sonnenblende ebenfalls schräg, weil parallel zur B-Säule verlaufen, so sollte die Höhe der Sonnenblende weniger als 90 % der Höhe des Fensters, vorzugsweise weniger als 85 % der Höhe des Fensters, ausmachen, um die Blende trotz dieser Schräge problemlos in drei Richtungen gleichzeitig in den Dichtungsspalt einschieben zu können.

In manchen Ausführungsformen der Erfindung ist nicht nur die Oberkante der Sonnenblende gekrümmt bzw. geknickt, sondern ist auch deren Unterkante in einem vorderen Bereich gekrümmt oder geknickt, so dass die Unterkannte dadurch (in Fahrtrichtung) aufwärts verläuft. Dies ermöglicht auch bei Sonnenblenden aus einem stark getönten transparenten Material - oder sogar bei undurchsichtigen Sonnenblenden - freie Sicht des Fahrers zum äußeren Rückspiegel. Alternativ oder zusätzlich dazu weist die Unterkante der erfindungsgemäßen Sonnenblende zu demselben Zweck im vorderen Bereich eine Ausnehmung auf, wie dies aus den späteren Beispielen hervorgeht.

Zur Stabilisierung der erfindungsgemäßen Sonnenblende in ihrer Position an der Fensterscheibe kann die Blende auch in einem Teilbereich oder an diskreten Stellen an die Scheibe angeheftet oder darauf aufgeklebt werden. Zu diesem Zweck kann beispielsweise entlang der Unterkante ein Selbstklebestreifen vorgesehen sein, und/oder es können am unteren Rand ein oder mehrere Saugnäpfe vorgesehen sein, was jedoch beides die Herstellungskosten erhöht und die Wiederverwendbarkeit der erfindungsgemäßen Sonnenblende einschränkt und daher nicht unbedingt zu bevorzugen ist.

### KURZBESCHREIBUNG DER ZEICHNUNGEN

Die Erfindung wird nachstehend unter Bezugnahme auf die beiliegenden Zeichnungen anhand von Ausführungsbeispielen näher beschrieben, wobei die Zeichnungen Folgendes darstellen:
Fig. 1 zeigt die Größenverhältnisse zwischen einer Ausführungsform der erfindungsgemäßen Sonnenblende mit Ausnehmung und der entsprechenden Fensterscheibe;
Fig. 2 zeigt den sichtbaren Bereich eines Fensters bei geschlossener Scheibe und einer eingeschobenen Sonnenblende mit gekrümmter Unterkante;
Fig. 3 zeigt eine andere Ausführungsform der erfindungsgemäßen Sonnenblende mit Ausnehmung und geknickter Oberkante;
Fig. 4 zeigt eine Ausführungsform der erfindungsgemäßen Sonnenblende mit Ausnehmung und schräger Seitenkante;
Fig. 5 zeigt eine weitere Ausführungsform der erfindungsgemäßen Sonnenblende mit geknickter Unterkante; und
Fig. 6 zeigt eine Ausführungsform der erfindungsgemäßen Sonnenblende mit einer Kombination aus geknickter Unterkante und Ausnehmung.

### BEISPIELE

Es folgt eine detalliertere Beschreibung der in den Zeichnungen dargestellten Ausführungsformen der Erfindung.

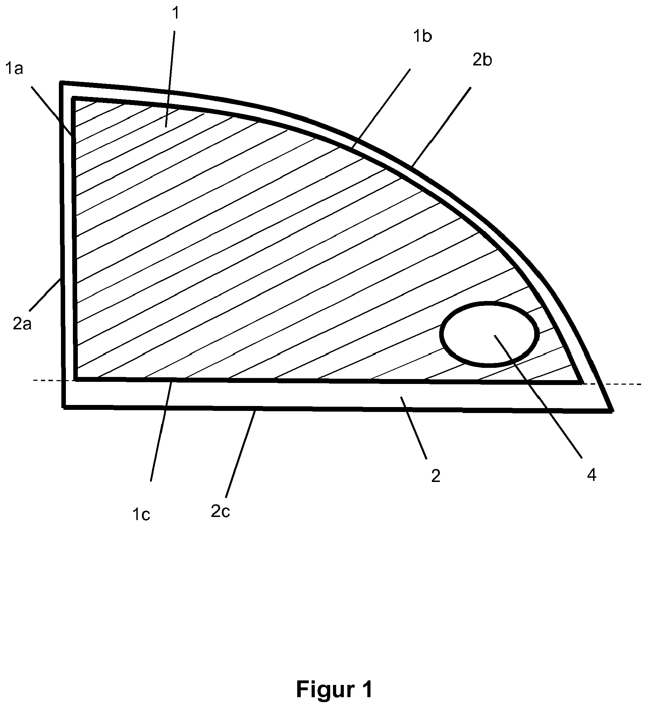

Fig. 1 zeigt schematisch eine einfache Ausführungsform der erfindungsgemäßen Sonnenblende 1 im Verhältnis zur damit zu versehenden Fensterscheibe 2, wobei in diesem Fall eine Sonnenblende für das Fenster der Fahrertür dargestellt ist. Es ist zu erkennen, dass die Sonnenblende 1 im Wesentlichen dieselbe Form wie die Scheibe 2 in deren oberem Bereich aufweist, d.h. an die Scheibenform angepasst, aber geringfügig untermaßig ausgeführt ist. Die Ränder der Sonnenblende 1 verlaufen dadurch im Wesentlichen parallel zu den Scheibenrändern. Somit weisen sowohl die Sonnenblende als auch die Scheibe jeweils eine Hinterkante, mit 1a und 2a bezeichnet, eine gekrümmte Oberkante, mit 1 b und 2b gekennzeichnet, und eine mit 1 c bzw. 2c bezeichnete Unterkante auf. Die Hinterkanten 1a und 2a verlaufen parallel zur (nicht dargestellten) B-Säule des Fahrzeugs, die im dargestellten Fall als vertikal verlaufend angenommen wurde. Die erfindungsgemäße Sonnenblende 1 weist in dieser Ausführungsform eine Ausnhemung 4 auf, um dem Fahrer freien Blick zum äußeren Rückspiegel zu ermöglichen.

Die Untermaßigkeit der Sonnenblende gegenüber der Fensterscheibe wird dadurch erzielt, dass - bei eingeschobener Blende - die horizontale Dimension und somit die Länge der Unterkante 1c der erfindungsgemäßen Sonnenblende 1 um einige Millimeter geringer ist als die Länge der Scheibe auf der entsprechenden Höhe. Letztere ist in Fig. 1 durch eine strichlierte Linie angezeigt. Die Längendifferenz auf dieser Höhe ergibt sich aus der Summe der beiden Abstände zwischen den Rändern der Sonnenblende an deren hinterem und vorderem Ende und jenen der Scheibe und macht erfindungsgemäß nicht mehr als etwa die Dicke der Fensterdichtung 3 aus, die in der Regel über den gesamten Fensterumfang, zumindest aber entlang der Seitenkante und der Oberkante dieselbe Dicke aufweist.

Die Höhe der Sonnenblende 1 macht in der in Fig. 1 gezeigten Ausführungsform etwa 90 % der Höhe der Fensterscheibe aus, wie dies speziell für getönte, aber weiterhin transparente Blenden bevorzugt wird, um einen wirksamen Blendschutz gegenüber seitlich einfallendem Sonnenlicht zu bieten, aber dennoch leichtes Einführen der Sonnenblende in den Dichtungsspalt sowie einfache Demontage derselben zu gewährleisten.

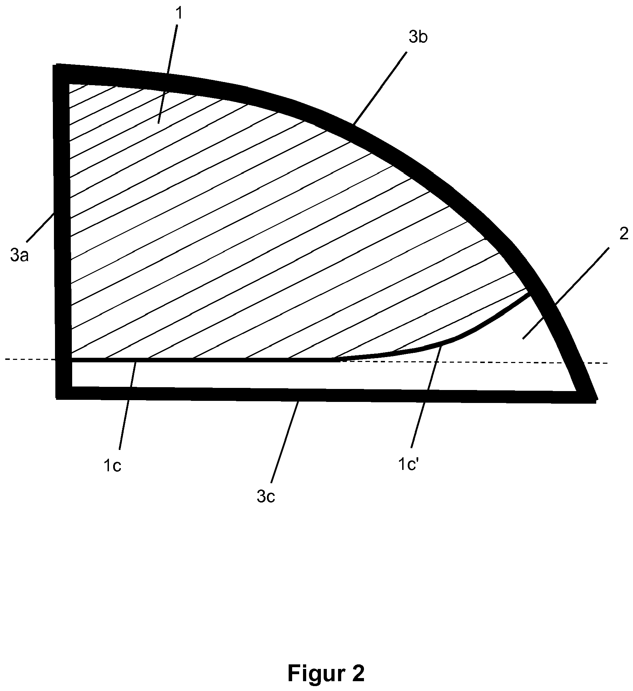

Die Dichtung 3 ist in Fig. 2 dargestellt und besteht ebenfalls aus einem hinteren, seitlichen Abschnitt 3a, einem gekrümmten oberen Abschnitt 3b und einem unteren Abschnitt 3c. Aus Fig. 2 lässt sich erkennen bzw. ableiten, dass die Sonnenblende 1 nach dem Einschieben in den Dichtungsspalt, also den Spalt zwischen der Dichtung 3 und der Scheibe 2, in drei Richtungen, d.h. in Vorwärts-, Aufwärts- und Rückwärtsrichtung, zwischen der Scheibe und der Dichtung eingeklemmt ist und dadurch in Position gehalten wird. Aufgrund der erfindungsgemäß nicht mehr als die halbe Dichtungsdicke betragenden Längendifferenz zwischen Sonnenblende und Scheibe (auf der entsprechenden Höhe) erstreckt sich die Sonnenblende an ihren Rändern jeweils zumindest bis zur Hälfte der Dicke der Dichtung in den Dichtungsspalt hinein, an der Oberkante üblicherweise noch deutlich weiter, da sie vom Benutzer in Aufwärtsrichtung bis zum Anschlag in den Dichtungsspalt eingeschoben werden kann.

Wie weit sie sich im Einzelfall in der jeweiligen Richtung in den Dichtungsspalt hinein erstreckt bzw. erstrecken kann, hängt von den Dimensionen der Sonnenblende ab, d.h. neben der Längendifferenz zur Scheibe insbesondere von der Dicke der Sonnenblende und davon, ob sie an den Rändern verjüngt ist oder nicht, wie dies zuvor bereits ausführlich beschrieben wurde. Besonders bevorzugt sind erfindungsgemäß dünne Sonnenblenden aus einem transparenten, aber getönten Kunststoff mit einer Dicke von nur 1 oder 2 mm, wie dies ebenfalls zuvor bereits ausführlich beschrieben wurde.

Speziell in solchen besonders bevorzugten Ausführungsformen kann die Höhe der Sonnenblende einen Gutteil der sichtbaren Höhe des Fensters, nämlich erfindungsgemäß zumindest zwei Drittel, vorzugsweise zumindest drei Viertel und noch bevorzugter zumindest vier Fünftel davon, betragen, da derartige Sonnenblenden aus Kunststoff in der Regel biegsam und flexibel sind und sich trotz nur geringfügiger Untermaßigkeit gut in den Dichtungsspalt einschieben lassen und aufgrund der Transparenz keine Sichtbehinderung für den Fahrer bei einem Blick zur Seite darstellen.

Speziell für Ausführungsformen mit geringer (oder fehlender) Transparenz oder auch sehr starker Tönung weist die Sonnenblende gemäß vorliegender Erfindung die erfindungsgemäße Aussparung in Form einer Ausnehmung 4 und/oder einer gekrümmten oder geknickten Unterkante 1c auf. In der in Fig. 2 dargestellten Ausführungsform ist die Sonnenblende 1 in einem vorderen Bereich 1 c' des unteren Randes 1 c gekrümmt, so dass der untere Rand in diesem Bereich aufwärts verläuft. Dadurch wird dem Fahrer im vorderen Bereich des Fensters auch bei montierter Sonnenblende ein freier Blick zum äußeren Rückspiegel ermöglicht.

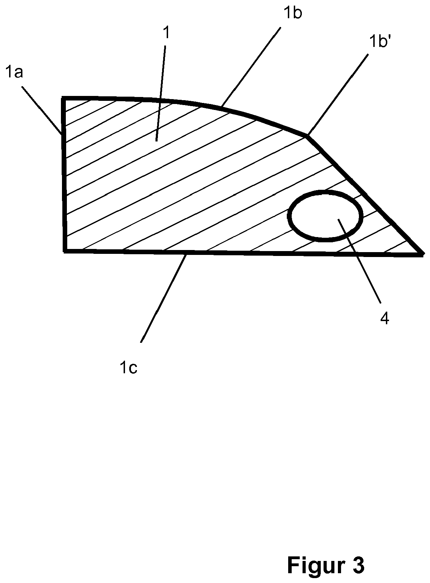

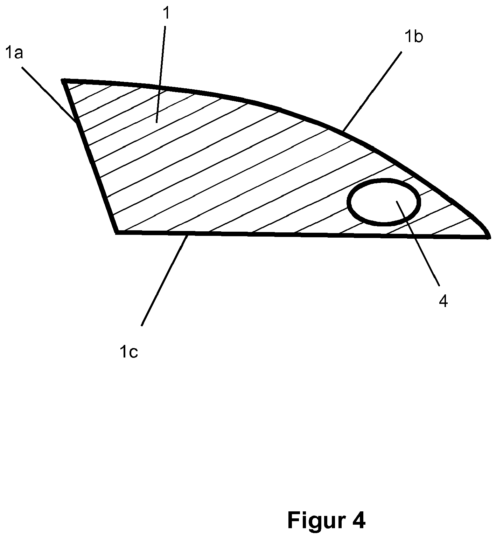

In Fig. 3 und Fig. 4 sind weitere Ausführungsformen der erfindungsgemäßen Sonnenblende 1 dargestellt, die, wie jene aus Fig. 1, in einem vorderen Bereich eine Ausnehmung 4, sozusagen ein Sichtfenster zum Rückspiegel aufweisen. Dabei ist in Fig. 3 eine Ausführungsform der erfindungsgemäßen Sonnenblende 1 abgebildet, deren Oberkante 1 b nicht nur gekrümmt ist, sondern an Position 1 b' auch einen Knick aufweist, falls das entsprechende Fenster eine ebensolche Form aufweist. Auch Ausführungsformen ohne jegliche Krümmung, d.h. solche, deren Oberkante nur einen oder mehrere Knicke aufweist, sowie Kombination davon mit gekrümmten Abschnitten sind möglich. In Fig. 4 ist die Hinterkante 1a an eine schräge, d.h. in einem spitzen Winkel zur Vertikalen verlaufende B-Säule des Fahrzeugs angepasst und verläuft ebenfalls schräg. Wie bereits erwähnt, sollte die Höhe der Sonnenblende 1 in solchen Fällen vorzugsweise weniger als 90 % der Höhe des Fensters, noch bevorzugter weniger als 85 % der Höhe des Fensters, ausmachen, um die Blende trotz dieser Schräge problemlos in den Dichtungsspalt einschieben zu können.

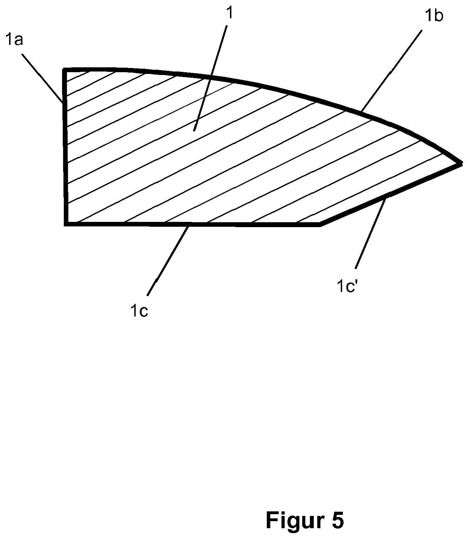

Fig. 5 zeigt eine alternative Ausführungsform der erfindungsgemäßen Sonnenblende 1, deren Unterkante in einem Bereich 1c' nicht gekrümmt, sondern geknickt ist und somit wiederum eine Aussparung für den Blick zum Rückspiegel bereitstellt.

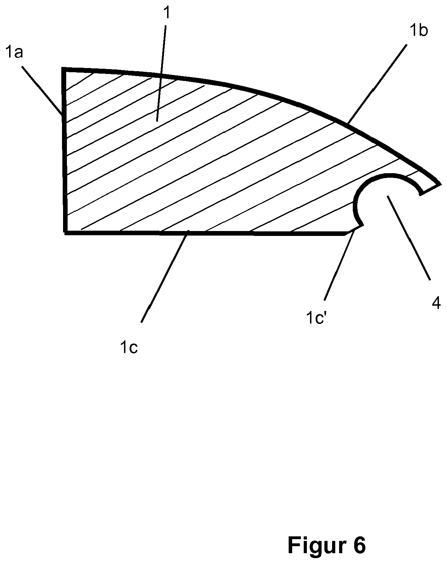

Fig. 6 zeigt eine ähnliche Ausführungsform der Sonnenblende wie in Fig. 1 mit einer Ausnehmung 4 im vorderen Bereich. Im vorliegenden Fall ist jedoch zusätzlich die Unterkante 1c der Blende in einem Bereich 1c' geknickt, so dass zusammen mit der Ausnehmung 4 eine kombinierte Aussparung für den Blick in den Rückspiegel gebildet wird.

Abschließend sei noch festgestellt, dass die Form der Ausnehmungen in den Sonnenblenden gemäß vorliegender Erfindung nicht speziell eingeschränkt ist. Zwar sind in den Zeichnungen durchwegs elliptische Ausnehmungen 4 dargestellt, diese können jedoch beispielsweise auch kreisförmig, quadratisch, rechteckig, trapezförmig oder andersartig ausgeführt sein, solange sie freien Blick zum Rückspiegel ermöglichen. Aus ästhetischen Gründen kann die Form der Ausnehmung auch an jene der Sonnenblende angepasst sein, d.h. die Ränder der Ausnehmung können beispielsweise parallel zur Oberkante 1 b und zur Unterlante 1 c verlaufen.

Die vorliegende Erfindung bietet somit eine vergleichsweise einfache - aufgrund dessen aber kostengünstig herstellbare -, aber dennoch höchst wirkungsvolle Alternative zu bestehenden Sonnenblenden für Kraftfahrzeugfenster, die im Gegensatz zum Stand der Technik den Blick des Fahrers in den Rückspiegel nicht behindert.

## Patentansprüche

1. Sonnenblende (1) für ein Fahrzeug-Seitenfenster zum Einschieben zwischen die Fensterscheibe (2), die eine zur B-Säule des Fahrzeugs parallele Seitenkante (2a) und eine abwärts gekrümmte Oberkante (2b) aufweist, und die Fensterdichtung (3), wobei die Sonnenblende (1) aus einer Platte aus Karton, Pappe oder Kunststoff besteht, die eine Dicke von nicht mehr als 5 mm und eine Form aufweist, die an die durch die Seitenkante (2a) und die abwärts gekrümmte Oberkante (2b) gegebene Form der Fensterscheibe (2) angepasst ist, deren horizontale Dimension jedoch geringer als jene der Fensterscheibe (2) ist, wobei die Differenz auf Höhe der Unterkante (1c) der Sonnenblende (1) nicht mehr als etwa die Dicke der Fensterdichtung (3) in der Scheibenebene ausmacht,
**dadurch gekennzeichnet, dass** die Sonnenblende (1)
a) einstückig ausgeführt ist;
b) von der Oberkante (2b) der Fensterscheibe (2) abwärts zumindest zwei Drittel der Höhe derselben abdeckt; und
c) freien Blick zum äußeren Rückspiegel durch eine Aussparung ermöglicht, die darin besteht, dass
i) die Unterkante (1c) der Sonnenblende (1) in einem vorderen Bereich (1 c') gekrümmt oder geknickt ist und dadurch aufwärts verläuft; und/oder
ii) die Unterkante (1c) der Sonnenblende (1) in einem vorderen Bereich eine Ausnehmung (4) aufweist.

2. Sonnenblende nach Anspruch 1, **dadurch gekennzeichnet, dass** sie von der Oberkante (2b) der Fensterscheibe (2) abwärts zumindest drei Viertel der Höhe derselben abdeckt.

3. Sonnenblende nach Anspruch 2, **dadurch gekennzeichnet, dass** sie von der Oberkante (2b) der Fensterscheibe (2) abwärts zumindest vier Fünftel der Höhe derselben abdeckt.

4. Sonnenblende nach einem der Ansprüche 1 bis 3, **dadurch gekennzeichnet, dass** sie nicht mehr als 90 % der Höhe der Fensterscheibe (2) abdeckt.

5. Sonnenblende nach einem der Ansprüche 1 bis 4, **dadurch gekennzeichnet, dass** ihre Dicke nicht mehr als 3 mm beträgt.

6. Sonnenblende nach einem der Ansprüche 1 bis 5, **dadurch gekennzeichnet, dass** die Platte aus getöntem transparentem Kunststoff besteht.

7. Sonnenblende nach einem der Ansprüche 1 bis 6, **dadurch gekennzeichnet, dass** entlang der Unterkante (1 c) ein Selbstklebestreifen vorgesehen ist.

8. Sonnenblende nach einem der Ansprüche 1 bis 7, **dadurch gekennzeichnet, dass** die Dicke der Sonnenblende (1) an der Seitenkante (1a) und/oder an der gekrümmten Oberkante (1b) zum Rand hin abnimmt.
